# EUROPÄISCHE PATENTANMELDUNG

(11) **EP 4 733 639 A1**
(43) Veröffentlichungstag der Anmeldung: **29.04.2026**
(21) Anmeldenummer: 24209124.7
(22) Anmeldetag: 28.10.2024
(51) Int. Cl.: F16K 3/24, F16K 27/04

(54) **VENTIL**

(71) Anmelder: Andritz AG, 8045 Graz (AT)
(72) Erfinder: Lehr, Maximilian, 1200 Wien (AT); Hollaus, Reinhard, 1060 Wien (AT); Frint, Michael, 2532 Heiligenkreuz (AT)
(74) Vertreter: Wirnsberger & Lerchbaum Patentanwälte OG

(57) **Zusammenfassung**

Die Erfindung betrifft ein Ventil (1) für einen Refiner oder eine Anlage zum Dampfdruckaufschluss, aufweisend einen entlang einer Einlassrichtung (4) orientierten Einlass (2) und einen entlang einer Auslassrichtung (5) orientierten Auslass (3), wobei die Auslassrichtung (5) unter einem Winkel (α) von weniger als 180 Grad zur Einlassrichtung (4) steht, sowie einen entlang der Einlassrichtung (4) verfahrbaren Kolben (6), wobei durch eine Bewegung des Kolbens (6) entlang der Einlassrichtung (4) ein Strömungsquerschnitt entlang eines Strömungspfades zwischen Einlass (2) und Auslass (3) veränderbar ist, wobei der Kolben (6) von einer ersten Position, in welcher das Ventil (1) geöffnet ist, entgegen der Einlassrichtung (4) in eine zweite Position bringbar ist, in welcher das Ventil (1) geschlossen ist, wobei der Kolben (6) eine Stirnfläche (7) aufweist, bei welcher ein Normalvektor (8) unter einem Normalwinkel (β) zur Einlassrichtung (4) steht. Um eine hohe Effizienz im Betrieb sowie eine besonders lange Standzeit zu erreichen, ist erfindungsgemäß vorgesehen, dass der Kolben (6) entgegen der Einlassrichtung (4) über die zweite Position hinaus bewegbar ist, um insbesondere einen allfälligen Verschleiß an der Stirnfläche (7) ausgleichen zu können.

## Beschreibung

Die Erfindung betrifft ein Ventil für einen Refiner oder eine Anlage zum Dampfdruckaufschluss, aufweisend einen entlang einer Einlassrichtung orientierten Einlass und einen entlang einer Auslassrichtung orientierten Auslass, wobei die Auslassrichtung unter einem Winkel von weniger als 180 Grad zur Einlassrichtung steht, sowie einen entlang der Einlassrichtung verfahrbaren Kolben, wobei durch eine Bewegung des Kolbens entlang der Einlassrichtung ein Strömungsquerschnitt entlang eines Strömungspfades zwischen Einlass und Auslass veränderbar ist, wobei der Kolben von einer ersten Position, in welcher das Ventil geöffnet ist, entgegen der Einlassrichtung in eine zweite Position bringbar ist, in welcher das Ventil geschlossen ist, wobei der Kolben eine Stirnfläche aufweist, bei welcher ein Normalvektor unter einem Normalwinkel zur Einlassrichtung steht.

Aus dem Stand der Technik sind Ventile der eingangs genannten Art bekannt geworden, um insbesondere unter einem hohen Druck stehende Flüssigkeiten oder Gase kontrolliert zu entspannen bzw. aus Druckbehältern abzulassen. Insbesondere werden derartige Ventile bei Anlagen zum Dampfdruckaufschluss wie beispielsweise MDF-RecyclingAnlagen oder Refinern eingesetzt.

Ventile des Standes der Technik sind beispielsweise aus den Dokumenten WO 2006/070321 A1 und DE 35 15 755 C1 bekannt geworden.

Nachteilig bei Ventilen des Standes der Technik hat sich eine geringe Standzeit einerseits und ein hoher Druckverlust bei offener Ventilstellung andererseits erwiesen, welcher eine geringe Effizienz bewirkt.

Hier setzt die Erfindung an. Aufgabe der Erfindung ist es, ein Ventil der eingangs genannten Art anzugeben, welches eine besonders lange Standzeit und in einem Betrieb eine besonders hohe Effizienz bewirkt.

Diese Aufgabe wird erfindungsgemäß durch ein Ventil der eingangs genannten Art gelöst, bei welchem der Kolben entgegen der Einlassrichtung über die zweite Position hinaus bewegbar ist, um insbesondere einen allfälligen Verschleiß an der Stirnfläche ausgleichen zu können.

Im Rahmen der Erfindung wurde erkannt, dass bei Ventilen des Standes der Technik insbesondere deshalb eine nur geringe Standzeit erreicht wird, weil an einer Stirnfläche des Kolbens insbesondere bei Einsatz des Ventils in einer Strömung, welche ein Fluid mit Feststoffen enthält, ein hoher Verschleiß auftritt, sodass eine Dichtwirkung in vergleichsweise kurzer Zeit nicht mehr gegeben ist.

Die Erfindung löst dieses Problem nun dadurch, dass der Kolben über die zweite Position, in welcher das Ventil gänzlich geschlossen ist, hinaus entgegen der Einlassrichtung bewegbar ist, sodass der Kolben bei einem Verschleiß an der Stirnfläche entsprechend des Verschleißes weiter in Richtung des Einlasses bewegt wird, um den Verschleiß auszugleichen. Somit ist bei einem erfindungsgemäßen Ventil insbesondere kein Ventilsitz oder Anschlag vorgesehen, welcher eine maximale Bewegung des Kolbens in einer Schließrichtung bereits an einer Position begrenzt, bei welcher das Ventil in einem Neuzustand bzw. einem verschleißlosen Zustand bereits geschlossen ist. Vielmehr ist der Kolben über diese Schließposition hinaus weiter entgegen der Einlassrichtung bewegbar und somit zur Verschleißkompensation im Einlass in Einlassrichtung bzw. entgegen der Einlassrichtung frei verfahrbar.

Im Fall eines Verschleißes werden somit die Endpositionen neu definiert, indem der Kolben entgegen der Einlassrichtung bewegt wird, sodass sich eine neue erste Position und eine neue zweite Position ergeben, in welchen neuen Positionen eine Funktion des verschleißbehafteten Ventils somit einer Funktion eines neuen Ventils entspricht. Dies ist grundsätzlich möglich, bis keine weitere Verstellung des Kolbens entgegen der Einlassrichtung möglich ist, sodass durch eine Länge des Kolbens ein Nachstellweg beeinflusst werden kann, um gegebenenfalls sehr lange Standzeiten zu erreichen.

Es versteht sich, dass das Ventil eine Einrichtung zur Bestimmung des Verschleißes aufweisen kann, sodass ein Nachstellen der Endpositionen auch automatisiert erfolgen kann.

Das Ventil wird üblicherweise derart eingesetzt, dass sich eine Strömung eines Fluides, welches gegebenenfalls Feststoffe enthält, vom Einlass zum Auslass ergibt, also am Einlass ein höherer Druck als am Auslass anliegt. Somit ergibt sich eine Strömung des Fluides entlang der Einlassrichtung in das Ventil bzw. zum Kolben hin und entlang der Auslassrichtung aus dem Ventil bzw. vom Kolben weg. Der Kolben wird somit bei dieser Anwendung bei einer Schließbewegung entgegen der Strömungsrichtung des Fluides im Einlass bewegt.

Grundsätzlich ist jedoch natürlich auch ein Einsatz des Ventils in der Weise möglich, dass am Auslass ein höherer Druck als am Einlass anliegt, sodass sich eine Strömung vom Auslass zum Einlass entgegen der Einlassrichtung und der Auslassrichtung ergibt. In diesem Fall wird der Kolben zum Schließen des Ventils somit von der ersten Position in die zweite Position parallel zu einer Strömung im Einlass bewegt.

Die Stirnfläche weist üblicherweise an zumindest einer Position, vorzugsweise entlang der gesamten Stirnfläche, einen Normalvektor auf, welcher unter einem Normalwinkel von beispielsweise mehr als 1 Grad, bevorzugt mehr als 30 Grad, zur Einlassrichtung steht.

Vorzugsweise weist die Stirnfläche einen Normalvektor auf, welcher etwa mit einer Winkelsymmetrale von Einlass und Auslass zusammenfällt. Dadurch ergibt sich eine günstige Umlenkung des Fluides vom Einlass zum Auslass, sodass beispielsweise bei Anordnung von Einlass und Auslass unter einem Winkel von 90 Grad relativ zueinander sich an der Stirnfläche eine Umlenkung von 45 Grad ergibt, wodurch gegenüber einer 90-Grad-Umlenkung eine erhöhte Effizienz bzw. ein reduzierter Druckverlust erreicht und ungünstige Turbulenzen vermieden oder zumindest minimiert werden.

Bevorzugt ist vorgesehen, dass die Stirnfläche einen Normalvektor aufweist, welcher in einer durch Einlassrichtung und Auslassrichtung definierten Ebene liegt. Auf diese Weise bewirkt die Stirnfläche eine Umlenkung der durch den Einlass einströmenden Strömung in Richtung des Auslasses.

Günstig ist es, wenn der Normalwinkel kleiner oder gleich dem Winkel ist, unter welchem der Einlass zum Auslass steht.

Bevorzugt beträgt der Normalwinkel 40 % bis 60 % des Winkels, unter welchem der Einlass zum Auslass steht. Um einen möglichst geringen Druckverlust und damit eine hohe Effizienz zu erreichen sowie gleichzeitig einen Verschleiß an der Stirnfläche zu reduzieren, ist bevorzugt vorgesehen, dass die Stirnfläche geometrisch stetig ist, insbesondere eben. Beispielsweise kann die Stirnfläche in einer einzigen Ebene liegen, welche unter einem entsprechenden Winkel zur Einlassrichtung steht. Bei einem zylindrischen Kolben entspricht die Stirnfläche dann einem entsprechenden Zylinderschnitt, sodass sich beispielsweise eine elliptische, ebene Stirnfläche ergibt.

Bevorzugt ist der Kolben zylindrisch ausgebildet. In dem Fall ist bevorzugt vorgesehen, dass die Stirnfläche bis zu einer Umfangsfläche des Kolbens ragt.

Um eine die zweite Position des Kolbens, in welchem das Ventil geschlossen ist, einem Verschleiß auf einfache Weise nachführen zu können, ist es günstig, wenn der Kolben umfangsseitig eine Dichtung aufweist, welche insbesondere durch einen oder mehrere Dichtringe gebildet ist. Dadurch wird auf einen Dichtsitz verzichtet, sodass eine Veränderung der Endpositionen in Hubrichtung des Kolbens bzw. entgegen der Einlassrichtung auf einfache Weise möglich und der Kolben dichtend im Einlass frei verfahrbar ist. Die umfangsseitige Dichtung kann sowohl als Liniendichtung als auch als Flächendichtung ausgebildet sein. Bevorzugt ist die Dichtung von der Stirnfläche beabstandet, sodass auch bei einem Verschleiß an der Stirnfläche eine Dichtwirkung gegeben ist. Beispielsweise kann vorgesehen sein, dass die Dichtung zumindest 1 cm, vorzugsweise zumindest 5 cm, von der Stirnfläche beabstandet ist.

Die Dichtung, welche einen oder mehrere Dichtringe oder Kolbenringe aufweisen kann, dichtet somit den Einlass an einer Umfangsfläche ab, wobei ein Querschnitt des Einlasses und ein Querschnitt des Kolbens üblicherweise entlang der Einlassrichtung bzw. der Hubrichtung konstant sind.

Im Unterschied dazu ist bei Ventilen des Standes der Technik häufig eine Dichtfläche vorgesehen, welche kegelförmig oder normal zur Strömungsrichtung angeordnet ist, beispielsweise gemäß dem Dokument DE 35 15 755 C1 kegelförmig zur Auslassrichtung, sodass ein auf den Einlass wirkender Druck auch auf den Kolben wirkt und diesen gegen die Dichtfläche drückt, wodurch die Dichtwirkung verstärkt wird. Eine derartig ausgerichtete Dichtfläche bewirkt jedoch auch einen Anschlag des Kolbens in der entsprechenden Richtung, sodass auf einen Verschleiß nicht reagiert werden kann.

Es ist daher auch bevorzugt vorgesehen, dass der Kolben entlang der Einlassrichtung zumindest bereichsweise einen konstanten Querschnitt aufweist. Auf diese Weise ist ein Nachführen der Endpositionen, in welchen das Ventil vollständig geöffnet bzw. vollständig geschlossen ist, zum Ausgleich eines Verschleißes auf einfache Weise möglich. Der Querschnitt ist üblicherweise kreisförmig, sodass sich ein zylindrischer Kolben ergibt, wenngleich auch ein nichtkreisförmiger Querschnitt möglich ist, beispielsweise ein Rechteckquerschnitt oder ein elliptischer Querschnitt von Kolben und Einlass.

Das Ventil kann grundsätzlich auf verschiedenste Weisen ausgebildet sein. Bevorzugt ist vorgesehen, dass der Winkel zwischen Einlass und Auslass 30 Grad bis 150 Grad, vorzugsweise 70 Grad bis 110 Grad, beträgt. Vielfach bedingen Gegebenheiten einer Anlage eine Umlenkung einer Strömung um einen bestimmten Winkel, beispielsweise um 90 Grad. Wenn das Ventil einen entsprechenden Winkel zwischen Einlass und Auslass aufweist, kann das Ventil nicht nur zum Absperren einer Strömung, sondern gleichzeitig als entsprechende Umlenkung eingesetzt werden. So kann bei einem Winkel von 90 Grad zwischen Einlassrichtung und Auslassrichtung eine unter 45 Grad geneigte Stirnfläche vorteilhaft sein, bei welcher also der Normalvektor auf die Stirnfläche unter 45 Grad zur Einlassrichtung steht, vorzugsweise über die gesamte Stirnfläche.

Das Ventil kann aufgrund der hohen Standzeit, welche auch unter abrasiven Einsatzbedingungen erreicht wird, unter anderem zur Steuerung von Strömungen von Fluiden, in welchen Feststoffe enthalten sind, eingesetzt werden, beispielsweise zum Steuern von Strömungen, welche Wasser und Holzstücke bzw. zerkleinerte MDF-Platten enthalten. Vielfach ist es bei derartigen Anlagen erforderlich, das Ventil nur teilweise zu öffnen, um beispielsweise einen bestimmten Druckverlust und/oder einen für eine nachgelagerte Anlage erforderlichen Volumenstrom zu erreichen. Hierzu könnte das Ventil grundsätzlich nur teilweise geöffnet werden, indem der Kolben in eine Zwischenposition zwischen erster Position und zweiter Position bewegt wird. Dies birgt jedoch ein Risiko, dass sich Feststoffe am nur teilweise geöffneten Kolben ansammeln, welche Feststoffe nicht durch einen entsprechend eingeschränkten Strömungsquerschnitt bewegt werden können, was wiederum zur vollständigen Blockade des Ventils führen kann.

Um ein derartiges Blockieren des Ventils insbesondere bei nur teilweiser Öffnung auf einfache Weise zu vermeiden, ist bevorzugt ein Antrieb vorgesehen, welcher zur zyklischen Bewegung des Kolbens eingerichtet ist, insbesondere mit einer Frequenz von 0,01 mHz bis 10 Hz, vorzugsweise 0,01 Hz bis 1 Hz. Somit kann eine faktisch nur teilweise Öffnung des Ventils bzw. ein reduzierter Volumenstrom über das Ventil beispielsweise dadurch erreicht werden, dass das Ventil regelmäßig vollständig geöffnet und teilweise oder vollständig geschlossen wird, indem über einen Variation der Zeiten, in welchen das Ventil vollständig geöffnet bzw. geschlossen ist, eine stufenlose Veränderung eines Volumenstromes über das Ventil im Sinne einer Pulsdauermodulation erreicht wird, wobei ein Risiko einer Blockade durch grobe Feststoffe vermieden ist. Dadurch kann beispielsweise bei Einsatz in einer Recyclinganlage für MDF-Platten ein regelmäßiger Austrag von Grobstoffen bei gleichzeitig geringem Dampfverbrauch erreicht werden. Aufgrund der geneigten Stirnfläche ist auch diese periodische Bewegung des Kolbens bzw. das zyklische Öffnen und Schließen des Ventils mit nur minimalen Turbulenzen im Ventil verbunden, sodass weiterhin eine hohe Effizienz erreicht wird.

Das Ventil kann für verschiedenste Anlagen eingesetzt werden. Bei einer Anlage mit einem Ventil zum Entspannen von Dampf unter einem Druck von mehr als 2 bar, vorzugsweise mehr als 10 bar, insbesondere mehr als 15 bar, über das Ventil, insbesondere einer Anlage zum Dampfdruckaufschluss, ist besonders bevorzugt vorgesehen, dass das Ventil erfindungsgemäß ausgebildet ist. Auf diese Weise können die Vorteile einer entsprechenden Konstruktion besonders gut genutzt werden. Bevorzugt wird das Ventil in einer Anlage eingesetzt, bei welcher der zu entspannende Dampf Feststoffe enthält, beispielsweise Fasern. Die Bestandteile des Ventils, insbesondere der Kolben und das Ventilgehäuse, können hierzu aus jedem für den jeweiligen Einsatzzweck tauglichen Material bestehen, beispielsweise aus einem Metall wie einem Stahl oder einem Edelstahl. Bevorzugt ist das entsprechende Material verschleißfest und für eine Temperatur von zumindest 200 °C geeignet.

Eine Anlage zum Dampfdruckaufschluss mit einem derartigen Ventil kann beispielsweise zur Herstellung von Biofuels, beispielsweise Bioethanol der zweiten Generation oder Black-Pellets, mithilfe der Steam Explosion bzw. des Dampfdruckaufschlusses aus verschiedenster Lignocellulose-Biomasse eingesetzt werden.

Weiter ist bei einer Anlage mit einem an einem Druckbehälter angeordneten Ventil zum Austragen eines Gemisches aus Wasser und Fasern über das Ventil aus dem Druckbehälter, insbesondere einer Anlage zum Recyceln von MDF-Platten, bevorzugt vorgesehen, dass das Ventil erfindungsgemäß ausgebildet ist. Das Gemisch kann dabei natürlich Wasser sowohl in flüssiger als auch in gasförmiger Form enthalten. Als Druckbehälter ist dabei jeder Behälter zu verstehen, in welchem ein Überdruck gegenüber einer Umgebung vorherrscht, sodass der Druckbehälter dabei beispielsweise auch ein Gehäuse eines Refiners sein kann.

Gerade bei derartigen Anlagen tritt häufig ein Verschleiß im Ventil aufgrund von Feststoffen bzw. Plattenresten auf, sodass durch Anwendung eines erfindungsgemäßen Ventils in einer solche Anlage eine Standzeit signifikant erhöht werden kann, wodurch eine Stillstandszeit der Anlage reduziert wird.

Bevorzugt ist bei einer solchen Anlage vorgesehen, dass ein Antrieb zum zyklischen Hin- und Herbewegen des Kolbens vorgesehen ist, um große Verunreinigungen zyklisch auszutragen und gleichzeitig einen Wasser- und/oder Dampfverbrauch zu minimieren. Auf diese Weise werden Blockaden im Bereich des Ventils durch große Verunreinigungen, die bei einer nur teilweise Öffnung des Kolbens auftreten könnten, auf einfache Weise vermieden. Zur Erreichung entsprechender zyklischer Bewegungen kann beispielsweise eine Steuerung vorgesehen sein, welche auf den Antrieb des Kolbens wirkt und ein regelmäßiges vollständiges Öffnen des Ventils bewirkt, indem der Kolben regelmäßig in die erste Position gebracht wird.

Um ein Ansammeln von Verunreinigungen in einem Druckbehälter einer solchen Anlage in einem Bereich einer Öffnung, über welche ein Medium aus dem Druckbehälter ausgetragen werden kann, auf einfache Weise zu verhindern, ist bevorzugt vorgesehen, dass der Einlass des Ventils mit der Öffnung einer Innenwand des Druckbehälters verbunden ist, wobei die Stirnfläche des Kolbens derart ausgebildet ist, dass der Kolben in einer Position, in welcher das Ventil geschlossen ist, die Öffnung verschließt, wobei die Innenwand bevorzugt in die Stirnfläche übergeht, insbesondere kantenfrei. Dadurch ergibt sich ein glatter Übergang von der Innenwand des Druckbehälters in die Stirnfläche, sodass ein Hängenbleiben oder ein Ansammeln von Feststoffen im Bereich der Öffnung auf einfache Weise vermieden ist und eine Strömung im Druckbehälter bei geschlossenem Ventil nicht beeinträchtigt wird. Der Druckbehälter kann dabei beispielsweise ein Behälter einer Anlage für den Dampfdruckaufschluss oder ein Gehäuse eines Refiners sein.

Es versteht sich, dass die Position, in welcher die Stirnfläche des Kolbens die Öffnung verschließt, sodass sich bei geschlossenem Ventil keine Feststoffe in der Öffnung und vor dem Kolben ansammeln können, eine Position sein kann, in welcher der Kolben entgegen der Einlassrichtung über die zweite Position hinaus bewegt ist. Somit kann beispielsweise bei einer Bewegung des Kolbens entgegen der Einlassrichtung ausgehend von einer offenen Ventilstellung zunächst das Ventil geschlossen werden, indem der Kolben an der zweiten Position einen Strömungspfad zwischen Einlass und Auslass gänzlich unterbricht, wonach der Kolben noch weiter entgegen der Einlassrichtung bewegt wird, bis sich der Kolben an einer dritten Position befindet, in welcher der Kolben die Öffnung verschließt. Bevorzugt wird die Öffnung vom Kolben in der dritten Position bündig verschlossen, sodass die Innenwand des Druckbehälters glatt in die Stirnfläche des Kolbens übergeht. Es kann auch vorgesehen sein, dass der Kolben über die dritte Position hinaus in den Druckbehälter hinein bewegt werden kann, um allenfalls stirnseitig am Kolben befindliche Feststoffe in den Druckbehälter zu schieben.

Derartige Druckbehälter weisen vielfach eine zylindrische Form mit gegebenenfalls ebenen stirnseitigen Endflächen auf. Die Öffnung kann im Druckbehälter stirnseitig oder umfangsseitig angeordnet sein. Es versteht sich, dass die Stirnseite des Kolbens dann entsprechend eben oder gekrümmt ausgebildet ist.

Der Auslass ist bei derartigen Druckbehältern bevorzugt derart angeordnet, dass die Auslassrichtung in einer Ebene normal zur Rotationsachse des Druckbehälters orientiert ist. Dadurch wird erreicht, dass die Stirnseite des Kolbens einerseits einen glatten Verschluss der Öffnung im Behälterinneren und andererseits eine günstige Strömungsumlenkung in Richtung des Auslasses bewirkt.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1a und 1b einen Schnitt durch ein Ventil in unterschiedlichen Zuständen;
Fig. 2 ein Flussschema einer Anlage mit einem erfindungsgemäßen Ventil;
Fig. 3a und 3b ein Detail einer Anlage in unterschiedlichen Ansichten;
Fig. 4a und 4b ein Detail einer weiteren Anlage in unterschiedlichen Ansichten;
Fig. 5a und 5b ein Detail einer weiteren Anlage in unterschiedlichen Ansichten;
Fig. 6a und 6b ein Detail einer weiteren Anlage in unterschiedlichen Ansichten.

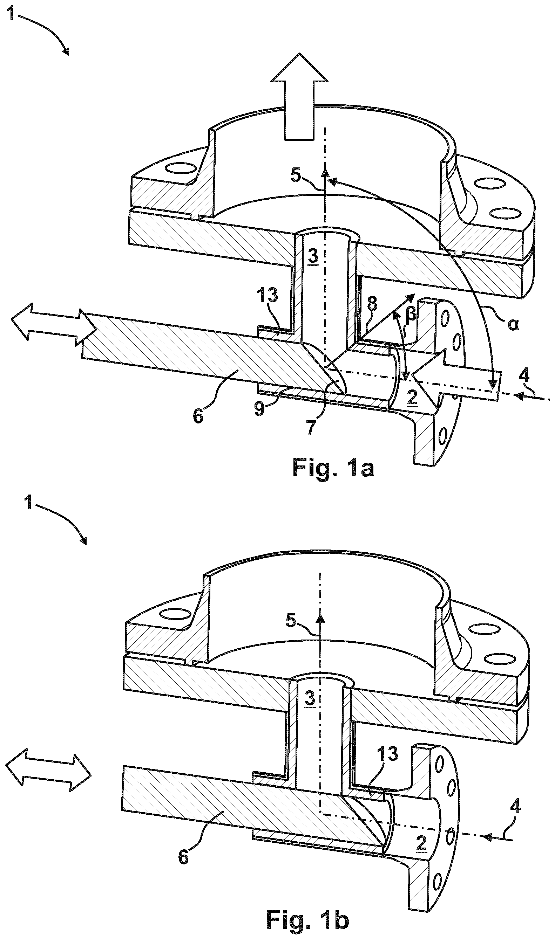

Fig. 1a und 1b zeigen ein erfindungsgemäßes Ventil 1 in Schnittdarstellung. Ersichtlich ist Ventilgehäuse 13 mit einem Einlass 2, welcher mit einem Auslass 3 verbunden ist, wobei der Einlass 2 unter einem Winkel α von etwa 90 Grad zum Auslass 3 steht. Im Ventilgehäuse 13 ist ein Kolben 6 bewegbar angeordnet, wobei durch eine Bewegung des Kolbens 6 von einer ersten Position zu einer zweiten Position ein Strömungsquerschnitt zwischen Einlass 2 und Auslass 3 veränderbar ist. Zum Bewegen des Kolbens 6 ist ein nicht dargestellter Antrieb vorgesehen.

Fig. 1a zeigt das Ventil 1 in einer geöffneten Position, in welcher sich der Kolben 6 an der ersten Position befindet, sodass eine Strömung zwischen Einlass 2 und Auslass 3 möglich ist.

Bei der in Fig. 1a dargestellten Position des Kolbens 6 und einem Überdruck am Einlass 2 ergibt sich somit eine Strömung durch das Ventil 1 entlang einer Einlassrichtung 4 bis zum Kolben 6, an welchem die Strömung umgelenkt wird, sodass sich in weiterer Folge eine Strömung entlang einer Auslassrichtung 5 durch den Auslass 3 ergibt.

Wie ersichtlich ist der Kolben 6 entlang der Einlassrichtung 4 mit konstantem Querschnitt, hier einem kreisförmigen Querschnitt, ausgebildet, sodass der Kolben 6 auch über die zweite Position hinausbewegt werden kann, an welcher zweiten Position der Kolben 6 den Auslass 3 gänzlich verschließt, sodass keine Strömung zwischen Einlass 2 und Auslass 3 möglich ist.

Eine solche geschlossene Situation des Ventils 1, in welcher sich der Kolben 6 in der zweiten Position befindet und somit den Auslass 3 verschließt, ist in Fig. 1b dargestellt.

Die Stirnfläche 7 des Kolbens 6 ist wie dargestellt eben ausgebildet und unter etwa 45 Grad zur Eingangsrichtung geneigt, sodass ein Normalvektor 8 auf die Stirnfläche 7 etwa in einer Winkelsymmetrale zwischen Einlass 2 bzw. Einlassrichtung 4 und Auslass 3 liegt. Der Normalvektor 8 steht somit hier unter einem Normalwinkel β auf die Einlassrichtung 4 von hier etwa 45 Grad.

Einlassrichtung 4 und Auslassrichtung 5 sowie der Normalvektor 8 liegen in einer Ebene, sodass die geneigte Stirnfläche 7 eine Umlenkung der Strömung, welche über den Einlass 2 in das Ventil 1 gelangt, zum Auslass 3 hin bewirkt. Dadurch werden Turbulenzen im Bereich des Kolbens 6 und somit ein Druckverlust minimiert, sodass eine besonders hohe Effizienz erreicht werden kann.

Ein Verschleiß tritt bei diesem Ventil 1 insbesondere bei Einsatz in einer Anlage, bei welcher Dampf mit hohem Druck und Feststoffen durch den Einlass 2 strömt, an der Stirnfläche 7 auf. Zur Verschleißkompensation ist der Kolben 6 über die zweite Position hinaus bewegbar, sodass der Kolben 6 nachgeführt werden kann. Eine Dichtung wird durch nicht dargestellte umfangsseitige Dichtringe, Dichtlippen, Kratzer, O-Ringe oder dergleichen erreicht, welche bevorzugt derart von der Stirnfläche 7 beabstandet sind, dass die Dichtung auch bei einem Verschleiß der Stirnfläche 7 gewährleistet ist.

Kolben 6 und Ventilgehäuse 13 können aus jedem für den jeweiligen Einsatzzweck tauglichen Material bestehen, beispielsweise aus einem Stahl, insbesondere einem verschleißfesten Edelstahl, wobei in einem entsprechenden Druckbehälter 10 beispielsweise ein Druck von 10 bar bis 22 bar und eine Temperatur von 200 °C vorherrschen kann.

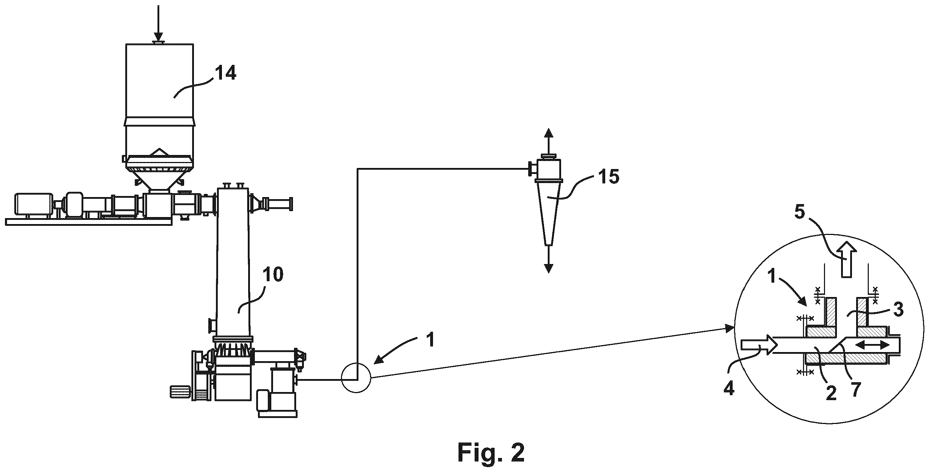

Fig. 2 zeigt ein Schema einer Anlage für den Dampfdruckaufschluss mit einem erfindungsgemäßen Ventil 1. Die Anlage weist wie dargestellt einen Silo 14 auf, über welchen Rohmaterial zugeführt werden kann, beispielsweise Holzchips. Diese Holzchips werden anschließend in einem Druckbehälter 10 mit Dampf aufgeschlossen, wonach ein Volumenstrom aus Dampf und aufgeschlossenem Material aus dem Druckbehälter 10 einem Zyklon 15 zugeführt wird, um Feststoffe abzutrennen. Wie ersichtlich ist das Ventil 1 an einer Position angeordnet, an welcher die Strömung um 90 Grad umgelenkt wird. Wie im in Fig. 2 dargestellten Detail ersichtlich ist auch hier ein Kolben 6 mit einer Stirnfläche 7 vorgesehen, bei welcher ein Normalvektor 8 etwa mittig zwischen Einlassrichtung 4 und Auslassrichtung 5 liegt, sodass sich durch die geneigte Stirnfläche 7 eine vorteilhafte Umlenkung der Strömung ergibt. Hier ist das Ventil 1 in der Weise eingesetzt, dass ein Druck am Einlass 2 höher ist als am Auslass 3, sodass sich am Einlass 2 eine Strömung in Einlassrichtung 4 ergibt.

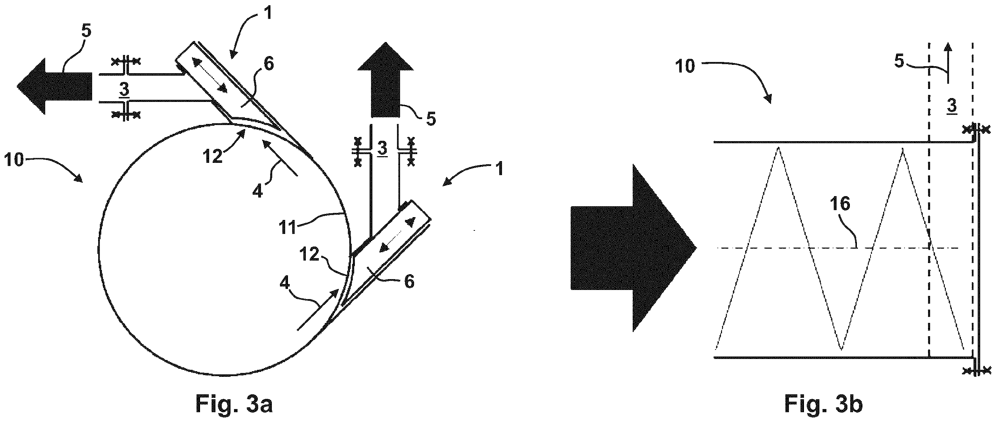

Fig. 3a und 3b zeigen einen Druckbehälter 10 einer Anlage mit horizontaler Förderschnecke, beispielsweise eine Austragsschnecke, wobei Fig. 3a den Druckbehälter 10 in einer Ansicht in Achsrichtung der Förderschnecke zeigt, während Fig. 3b den Druckbehälter 10 in einer Seitenansicht zeigt. Aus dem Druckbehälter 10 kann wie dargestellt über zwei erfindungsgemäß ausgebildete Ventile 1, welche an Öffnungen 12 an einer Innenwand 11 positioniert sind, ein Medium entnommen werden, wobei die Ventile 1 derart positioniert sind, dass die Einlassrichtung 4 jeweils tangential an den Umfang des Druckbehälters 10 angrenzt.

Wie ersichtlich sind die Kolben 6 hier entlang der Einlassrichtung 4 so weit über die zweite Position hinaus bis zu einer dargestellten dritten Position bewegbar, dass die Kolben 6 die Öffnungen 12 gänzlich und glatt verschließen. Hierzu weisen die Kolben 6 eine mit der Innenwand 11 des Druckbehälter 10 korrespondierende Krümmung auf. Dadurch wird ein Ansammeln von Feststoffen im Einlass 2 vor dem Kolben 6, welche zu einer Blockade dieser Öffnung 12 führen könnten, auf einfache Weise vermieden.

Die Auslassrichtung 5 liegt hier in einer Ebene, welche normal zur Rotationsachse 16 ist, und liegt derart relativ zur Einlassrichtung 4, dass sich durch die Stirnfläche 7 des Kolbens 6, welche hier dadurch definiert ist, dass der Kolben 6 die Innenwand 11 glatt abschließen kann, wiederum eine strömungsmechanisch vorteilhafte Umlenkung der Strömung in Richtung der Auslassrichtung 5 ergibt. Die geneigte Stirnfläche des Kolbens bewirkt somit hier einerseits einen dichten Verschluss der Öffnung, wenn das Ventil geschlossen ist, und andererseits eine günstige Umlenkung der Strömung im Ventil bei geöffnetem Ventil.

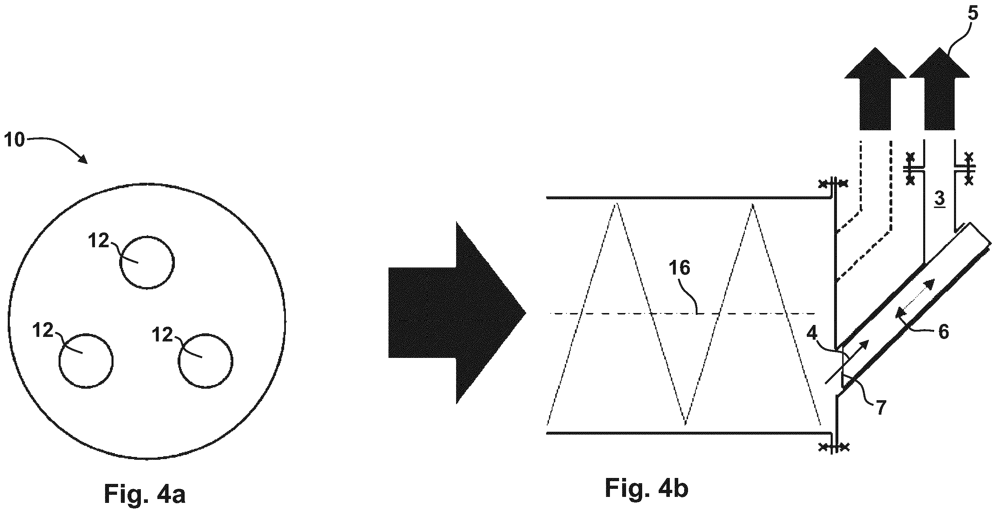

Fig. 4a und 4b zeigen einen weiteren Druckbehälter 10 mit horizontaler Förderschnecke, wobei Fig. 4a den Druckbehälter 10 wieder in Achsrichtung und Fig. 4b eine Seitenansicht zeigen. Im Unterschied zu dem in Fig. 3a und 3b dargestellten Druckbehältern 10 sind die Öffnungen 12, über welche ein Medium aus dem Druckbehälter 10 austreten kann, hier nicht an einer Umfangsfläche 9, sondern stirnseitig angeordnet. Entsprechend sind die Stirnflächen 7 der Kolben 6 hier zum glatten Verschluss der Öffnungen 12 eben ausgebildet. Weiter sind auch hier die Stirnflächen 7 relativ zur Einlassrichtung 4 geneigt, sodass sich wiederum eine günstige Umlenkung der Strömung im Ventil 1 zur Auslassrichtung 5 hin ergibt, welcher hier ebenfalls in einer Ebene normal zur Rotationsachse 16 der Förderschnecke liegt.

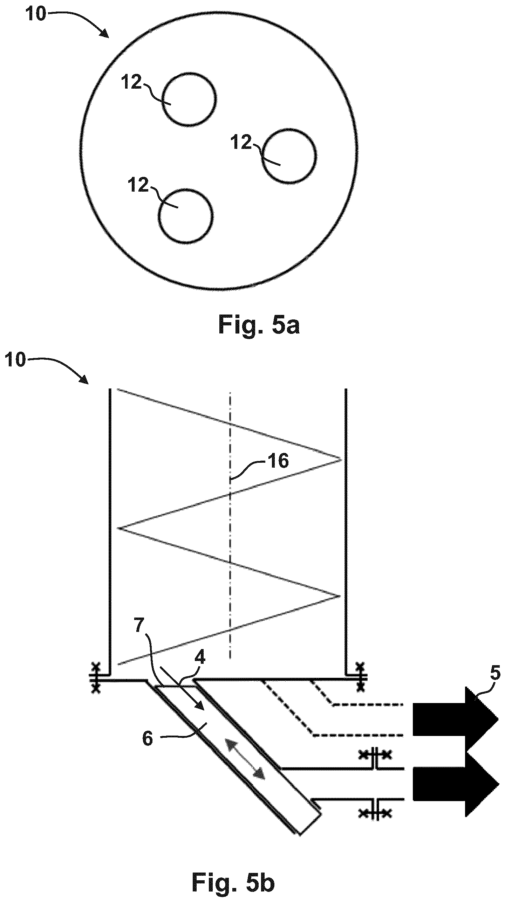

Fig. 5a und 5b zeigen einen weiteren Druckbehälter 10 mit Förderschnecke und erfindungsgemäß ausgebildeten Ventilen 1, bei welchem es sich beispielsweise um einen Konstantförderer handeln kann. Im Unterschied zu dem in Fig. 4a und 4b dargestellten Druckbehälter 10 weist dieser eine vertikale Förderschnecke auf und sind die Öffnungen 12 sowie die Ventile 1 bodenseitig positioniert. Analog zu dem in Fig. 4a und 4b dargestellten Druckbehälter 10 sind auch hier die Kolben 6 der Ventile 1 mit einer schrägen Stirnfläche 7 ausgebildet, um die Öffnungen 12 glatt verschließen zu können und eine günstige Strömungsumlenkung im Ventil 1 zu erreichen und liegt auch hier die Auslassrichtung 5 in einer Ebene, welche normal auf die Rotationsachse 16 der Förderschnecke ist.

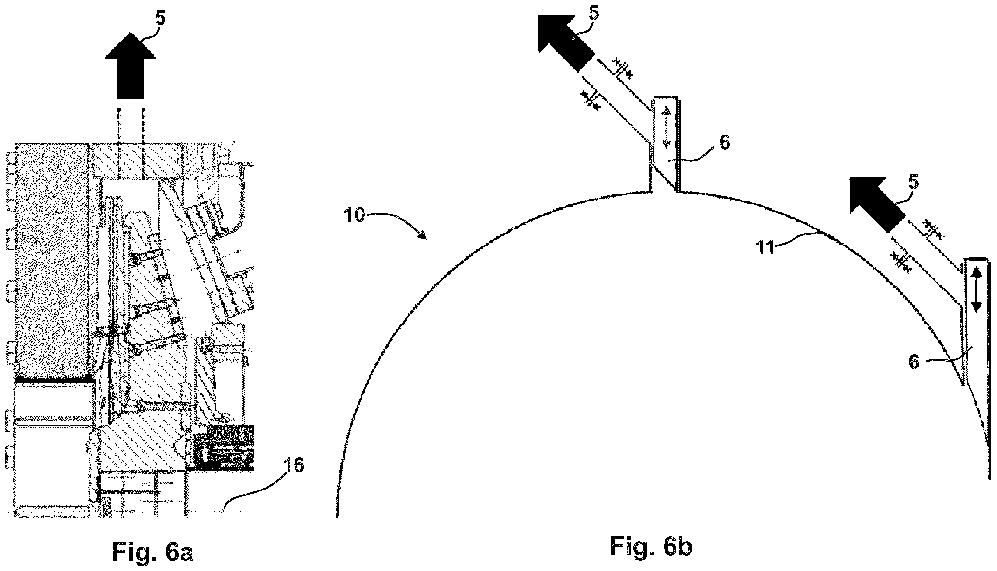

Fig. 6a und 6b zeigen einen Refiner mit zwei Ventilen 1, wobei Fig. 6a einen Achsenschnitt zeigt und Fig. 6b einen Schnitt in einer Ebene normal der Rotationachse des Refiners. Wie ersichtlich mündet eines der Ventile 1 tangential und eines der Ventile 1 radial in den Druckbehälter 10. Das tangential in den Druckbehälter 10 mündende Ventil 1 ist wiederum mit einer Stirnfläche 7 ausgebildet, welche glatt in die Innenwand 11 übergeht, um Blockaden im Bereich des Einlasses 2 vor dem Kolben 6 zu verhindern. Das radial einmündende Ventil 1 weist einen Kolben 6 mit einer Stirnfläche 7 auf, welche günstig für eine Strömungsumlenkung im Ventil 1 ist, jedoch die Innenwand 11 nicht glatt verschließen kann. Um eine Verstopfung der Öffnung 12 an diesem radialen Ventil 1 zu verhindern, kann vorgesehen sein, dass der Kolben 6 so weit in den Druckbehälter 10 des Refinders hinein bewegt wird, dass kein Volumen im Einlass 2 vor dem Kolben 6 verbleibt und somit jegliche Feststoffe, welche sich im Einlass 2 des Ventils 1 ansammeln könnten, wieder zurück in den Druckbehälter 10 geschoben werden.

Die in den Fig. 3a bis 6b dargestellten Ventile 1 können wie dargestellt vertikal und horizontal montiert und gegebenenfalls auch direkt umfangsseitig oder stirnseitig in den Druckbehälter 10 bzw. das Gehäuse des Refiners integriert oder am Druckbehälter 10 bzw. dem Gehäuse montiert sein, sodass ein Schweißaufwand minimiert wird. Je nach Orientierung der Ventile 1 ergibt sich somit eine radiale, tangentiale oder axiale Strömung in den Einlass 2 bzw. durch das Ventil 1.

Die einzelnen in den Fig. 2 bis 6b dargestellten Ventile 1 können in der Weise betrieben werden, dass der Kolben 6 zyklisch bewegt wird, um einerseits ein Verstopfen des Ventils 1 durch Feststoffe zu verhindern und gleichzeitig einen Dampfverlust zu minimieren, sodass sich ein besonders effizienter Betrieb ergibt. Alternativ ist natürlich auch ein Betrieb mit vollständig oder nur teilweise geöffnetem Ventil, wobei sich der Kolben zwischen erster Position und zweiter Position befindet, möglich, um einen kontinuierlichen Volumenstrom über das Ventil zu erreichen.

Ein erfindungsgemäßes Ventil 1 ermöglicht eine besonders hohe Standzeit insbesondere bei Einsatz in Fluiden welche Verunreinigungen enthalten, beispielsweise bei Anlagen zum MDF-Recycling, sowie einen besonders effizienten Betrieb, da Strömungsverluste bei einer Umlenkung der Strömung im Ventil 1 minimiert werden.

## Patentansprüche

1. Ventil (1) für einen Refiner oder eine Anlage zum Dampfdruckaufschluss, aufweisend einen entlang einer Einlassrichtung (4) orientierten Einlass (2) und einen entlang einer Auslassrichtung (5) orientierten Auslass (3), wobei die Auslassrichtung (5) unter einem Winkel (α) von weniger als 180 Grad zur Einlassrichtung (4) steht, sowie einen entlang der Einlassrichtung (4) verfahrbaren Kolben (6), wobei durch eine Bewegung des Kolbens (6) entlang der Einlassrichtung (4) ein Strömungsquerschnitt entlang eines Strömungspfades zwischen Einlass (2) und Auslass (3) veränderbar ist, wobei der Kolben (6) von einer ersten Position, in welcher das Ventil (1) geöffnet ist, entgegen der Einlassrichtung (4) in eine zweite Position bringbar ist, in welcher das Ventil (1) geschlossen ist, wobei der Kolben (6) eine Stirnfläche (7) aufweist, bei welcher ein Normalvektor (8) unter einem Normalwinkel (β) zur Einlassrichtung (4) steht, **dadurch gekennzeichnet, dass** der Kolben (6) entgegen der Einlassrichtung (4) über die zweite Position hinaus bewegbar ist, um insbesondere einen allfälligen Verschleiß an der Stirnfläche (7) ausgleichen zu können.

2. Ventil (1) nach Anspruch 1, **dadurch gekennzeichnet, dass** die Stirnfläche (7) einen Normalvektor (8) aufweist, welcher in einer durch Einlassrichtung (4) und Auslassrichtung (5) definierten Ebene liegt.

3. Ventil (1) nach Anspruch 1 oder 2, **dadurch gekennzeichnet, dass** der Normalwinkel (β) kleiner oder gleich dem Winkel (α) ist, unter welchem der Einlass (2) zum Auslass (3) steht.

4. Ventil (1) nach einem der Ansprüche 1 bis 3, **dadurch gekennzeichnet, dass** der Normalwinkel (β) 40 % bis 60 % des Winkels (α) beträgt, unter welchem der Einlass (2) zum Auslass (3) steht.

5. Ventil (1) nach einem der Ansprüche 1 bis 4, **dadurch gekennzeichnet, dass** die Stirnfläche (7) geometrisch stetig ist, insbesondere eben.

6. Ventil (1) nach einem der Ansprüche 1 bis 5, **dadurch gekennzeichnet, dass** die Stirnfläche (7) bis zu einer Umfangsfläche (9) des Kolbens (6) ragt.

7. Ventil (1) nach einem der Ansprüche 1 bis 6, **dadurch gekennzeichnet, dass** der Kolben (6) umfangsseitig eine Dichtung aufweist, insbesondere einen oder mehrere Dichtringe.

8. Ventil (1) nach einem der Ansprüche 1 bis 7, **dadurch gekennzeichnet, dass** der Kolben (6) entlang der Einlassrichtung (4) zumindest bereichsweise einen konstanten Querschnitt aufweist.

9. Ventil (1) nach einem der Ansprüche 1 bis 8, **dadurch gekennzeichnet, dass** der Winkel (α) zwischen Einlass (2) und Auslass (3) 30 Grad bis 150 Grad, vorzugsweise 70 Grad bis 110 Grad, beträgt.

10. Ventil (1) nach einem der Ansprüche 1 bis 9, **dadurch gekennzeichnet, dass** ein Antrieb vorgesehen ist, welcher zur zyklischen Bewegung des Kolbens (6) eingerichtet ist, insbesondere mit einer Frequenz von 0,01 Hz bis 1 Hz.

11. Anlage mit einem Ventil (1) zum Entspannen von Dampf unter einem Druck von mehr als 2 bar, vorzugsweise mehr als 10 bar, insbesondere mehr als 15 bar, über das Ventil (1), insbesondere Anlage zum Dampfdruckaufschluss, **dadurch gekennzeichnet, dass** das Ventil (1) nach einem der Ansprüche 1 bis 10 ausgebildet ist.

12. Anlage mit einem an einem Druckbehälter (10) angeordneten Ventil (1) zum Austragen eines Gemisches aus Wasser und Fasern über das Ventil (1) aus dem Druckbehälter (10), insbesondere Anlage zum Recycling von MDF-Platten, **dadurch gekennzeichnet, dass** das Ventil (1) nach einem der Ansprüche 1 bis 10 ausgebildet ist.

13. Anlage nach Anspruch 11 oder 12, **dadurch gekennzeichnet, dass** ein Antrieb zum zyklischen Hin- und Herbewegen des Kolbens (6) vorgesehen ist, um große Verunreinigungen zyklisch auszutragen und gleichzeitig einen Wasser- und/oder Dampfverbrauch zu minimieren.

14. Anlage nach einem der Ansprüche 11 bis 13, **dadurch gekennzeichnet, dass** der Einlass (2) des Ventils (1) mit einer Öffnung (12) in einer Innenwand (11) eines Druckbehälters (10) verbunden ist, wobei die Stirnfläche (7) des Kolbens (6) derart ausgebildet ist, dass der Kolben (6) in einer Position, in welcher das Ventil (1) geschlossen ist, die Öffnung (12) verschließt, wobei die Innenwand (11) bevorzugt in die Stirnfläche (7) übergeht, insbesondere kantenfrei.

15. Anlage nach einem der Ansprüche 11 bis 14, **dadurch gekennzeichnet, dass** die Öffnung (12) im Druckbehälter (10) stirnseitig oder umfangsseitig angeordnet ist.
